# EUROPEAN PATENT APPLICATION

(11) **EP 4 628 480 A1**
(43) Date of publication of application: **08.10.2025**
(21) Application number: 23897642.7
(22) Date of filing: 22.11.2023
(51) Int. Cl.: C07C 255/07, C08F 220/44

(54) **ACRYLONITRILE COMPOSITION**

(30) Priority: 29.11.2022 JP 2022189839
(71) Applicant: Toray Industries, Inc., Tokyo 103-8666 (JP)
(72) Inventor: SAWAI Kenji, Tokyo 103-8666 (JP); TSUKAMOTO Daijiro, Nagoya-shi, Aichi 455-8502 (JP); OKUDA Haruki, Tokyo 103-8666 (JP); SUZUKI Ayako, Nagoya-shi, Aichi 455-8502 (JP)
(74) Representative: Mewburn Ellis LLP
(86) International application number: PCT/JP2023/041970
(87) International publication number: WO 2024/116994

(57) **Abstract**

An acrylonitrile composition containing 1 ppm or more and less than 100 ppm of at least one selected from a nitrile compound represented by general Formula (I) and a nitrile compound represented by general Formula (II) with respect to acrylonitrile: 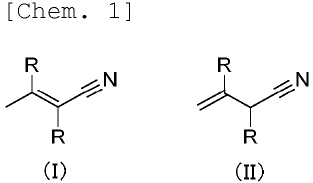 [in the formula, R each independently represents any of hydrogen and an alkyl group having 1-5 carbon atoms].

## Description

### TECHNICAL FIELD

The present invention relates to an acrylonitrile composition.

### BACKGROUND ART

Acrylonitrile is a petroleum-derived compound that has long been widely used for fiber and resin applications. For fiber applications, acrylonitrile is used as a raw material of polyacrylonitrile (PAN), which is made up of acrylonitrile as the sole constituent raw material, and for resin applications, acrylonitrile is used as a raw material for ABS, which is made up of butadiene, styrene, and other constituent raw materials in addition to acrylonitrile. Since acrylonitrile is easily polymerized by a radical reaction or the like, the reaction proceeds even at the time of storage, and therefore products to which a polymerization inhibitor such as monomethyl ether hydroquinone or hydroquinone methyl ether (hereinafter "MEHQ") is added are industrially distributed.

When PAN or ABS is polymerized using acrylonitrile as a raw material, acrylonitrile is usually stored in a metal tank and used. However, Non-Patent Document 1 discloses that a small amount of impurities contained in acrylonitrile are oxidized to peroxide and the promotion of polymerization is hindered at the time of acrylonitrile storage, that acrylonitrile is preferably stored in soft steel or the like, that copper, lead, magnesium, and aluminum tend to cause or promote chemical change in acrylonitrile, and that there is a bad influence when a polymerization reaction is performed without removing iron oxide mixed when the acrylonitrile is stored in an iron container, and therefore the iron component in acrylonitrile is 0.2 ppm or less.

Patent Document 1 discloses pH control by addition of an organic acid as means for improving stability of crude acrylonitrile in a crude tank.

### PRIOR ART DOCUMENTS

### PATENT DOCUMENT

Patent Document 1: Japanese Unexamined Patent Publication (Kokai) No. 2020-19793

### NON-PATENT DOCUMENT

Non-Patent Document 1: Acrylonitrile-Chemistry and Industry (Gihodo, p. 42 to 43, 1959)

### SUMMARY OF THE INVENTION

### PROBLEMS TO BE SOLVED BY THE INVENTION

The present inventors have found a problem that the stability decreases as the iron content in acrylonitrile increases.

Therefore, an object of the present invention is to provide an acrylonitrile composition having improved stability when stored in a container of iron or an alloy containing iron.

### SOLUTIONS TO THE PROBLEMS

As a result of intensive studies to solve the above problems, the present inventors have found that a specific nitrile compound has an effect of improving acrylonitrile stability in the presence of iron, and have completed the present invention. That is, the present invention includes the following (1) to (8).
(1) An acrylonitrile composition containing 1 ppm or more and less than 100 ppm of at least one selected from a nitrile compound represented by general Formula (I) and a nitrile compound represented by general Formula (II) with respect to acrylonitrile. 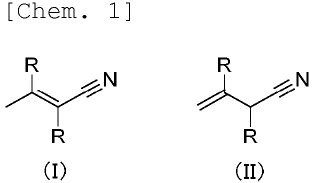 [In the formula, R each independently represents any of hydrogen and an alkyl group having 1-5 carbon atoms].
(2) The acrylonitrile composition of above (1), in which the nitrile compound is a nitrile compound containing any of 2-methyl-2-butenenitrile, 2-butenenitrile, 2-methyl-3-butenenitrile, 3-methyl-3-butenenitrile, and 3-butenenitrile.
(3) Polyacrylonitrile produced by polymerizing the acrylonitrile composition according to above (1) or (2).
(4) A method for producing polyacrylonitrile, the method including polymerizing the acrylonitrile composition according to claim (1) or (2).
(5) An acrylonitrile copolymer produced by copolymerizing the acrylonitrile composition and the vinyl compound according to above (1) or (2) and a vinyl compound.
(6) A method for producing an acrylonitrile copolymer, the method including copolymerizing the acrylonitrile composition according to above (1) or (2) and a vinyl compound.
(7) A polyacrylonitrile fiber produced by a process including the following steps (A) and (B):
   (A) a step of producing polyacrylonitrile by the method according to above (4); and
   (B) a step of spinning the polyacrylonitrile obtained in step (A).
(8) A resin molded article produced by a process including the following steps (C) and (D):
   (C) a step of producing acrylonitrile copolymer by the method according to above (6); and
   (D) a step of molding acrylonitrile copolymer obtained in step (C).

### EFFECTS OF THE INVENTION

According to the present invention, it is possible to provide an acrylonitrile composition having improved stability when stored in a container of iron or an alloy containing iron.

### EMBODIMENTS OF THE INVENTION

Preferable embodiments of the present invention will be described below in detail. The present invention is not limited only to the embodiments described below but should be understood to also include various modification examples implemented without changing the gist of the present invention.

### [Acrylonitrile Composition]

The acrylonitrile composition of the present invention contains the nitrile compound described later in an amount of 1 ppm or more and less than 100 ppm with respect to acrylonitrile, thereby improving stability when stored in a container of iron or an alloy containing iron. The content of the nitrile compound is more preferably 1 ppm or more and less than 90 ppm, still more preferably 1 ppm or more and less than 80 ppm, and particularly preferably 1 ppm or more and less than 70 ppm. The content of the nitrile compound can be measured by gas chromatography. When the acrylonitrile composition contains a component other than the nitrile compound, the content is determined based on the amount of acrylonitrile.

The method for preparing the acrylonitrile composition containing a nitrile compound is not particularly limited, but the acrylonitrile composition is obtained by adding a nitrile compound to acrylonitrile as an example. In addition, a nitrile compound may be added before or during the reaction in which acrylonitrile is produced, or a compound that is converted into a nitrile compound during the reaction in which acrylonitrile is produced may be added before the reaction. In addition, acrylonitrile containing a compound to be converted into a nitrile compound in advance can also be preferably used.

Here, the reaction for producing acrylonitrile is not particularly limited, and examples thereof include a reaction of 3-hydroxypropionic acid with ammonia, an ammoxidation of glycerol, and a reaction of acrylic acid with ammonia, in addition to ammooxidation of propane/propylene, which is a normal industrial method for producing acrylonitrile.

The acrylonitrile composition may contain other components that do not inhibit the effect of the present invention, and the content of acrylonitrile in the acrylonitrile composition is not particularly limited, but is preferably 90 wt.% or more, more preferably 95 wt.% or more, and particularly preferably 99 wt.% or more.

### [Nitrile Compound]

The nitrile compound is at least one selected from a nitrile compound represented by the following general Formula (I) and a nitrile compound represented by the general Formula (II).

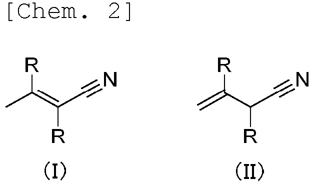

[In the formula, R each independently represents any of alkyl groups having 1-5 carbon atoms.]

Here, specific examples of the alkyl group having 1-5 carbon atoms include a methyl group, an ethyl group, an n-propyl group, an isopropyl group, an n-butyl group, a secbutyl group, an isobutyl group, a tert-butyl group, an n-pentyl group, a neopentyl group, an isopentyl group, a secpentyl group, a 3-pentyl group, and a tert-pentyl group.

As the nitrile compound, 2-butene nitrile, 2-methyl-2-butene nitrile, 3-butene nitrile, 2-methyl-3-butene nitrile, and 3-methyl-3-butene nitrile respectively represented by the following Formulas (I-1), (I-2), (II-1), (II-2), and (II-3) are preferable from the viewpoint of availability, and 2-butene nitrile (I-1) and 2-methyl-2-butene nitrile (I-2) are more preferable from the viewpoint of economic efficiency.

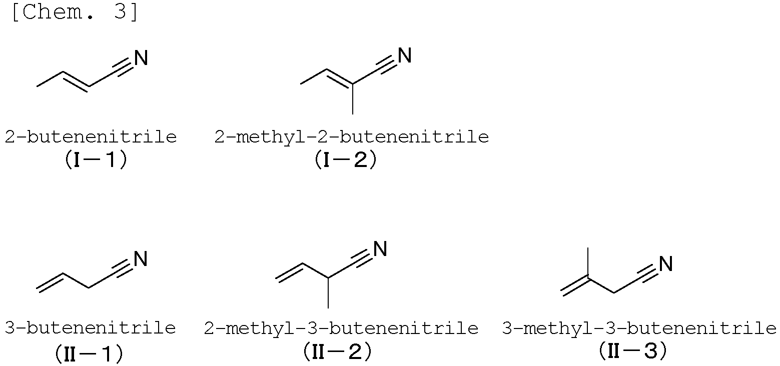

### [Production of Polyacrylonitrile]

Polyacrylonitrile can be produced by polymerizing the acrylonitrile composition of the present invention. In addition, in the present invention, the polyacrylonitrile refers to a polymer in which at least acrylonitrile is a main constituent of the polymer framework, and the main constituent typically refers to a constituent that accounts for 90 to 100 mol.% of the polymer framework. In the present invention, polyacrylonitrile preferably contains a copolymerization component from the viewpoint of improving the yarn making properties and from the viewpoint of efficiently performing the stabilization treatment in the case of carbon fiber formation. When polyacrylonitrile is obtained in the present invention, the method may be selected from known polymerization methods.

### [Production of Polyacrylonitrile Fiber]

A polyacrylonitrile fiber can be produced by spinning the polyacrylonitrile of the present invention. A spinning dope can be obtained by dissolving polyacrylonitrile in a known solvent in spinning. The spinning dope can be spun by a dry wet spinning method, a wet spinning method, or a dry spinning method. When a dry wet spinning method or a wet spinning method is employed, the coagulating bath for coagulating the spinning dope preferably contains a solvent used as a solvent of the spinning dope and a so-called coagulation accelerator such as water.

### [Production of Acrylonitrile Copolymer]

An acrylonitrile copolymer can be produced by copolymerizing the acrylonitrile composition of the present invention and the vinyl compound.

The vinyl compound used in the present invention is not particularly limited, and examples thereof include styrene, α-methylstyrene, orthomethylstyrene, paramethylstyrene, para-t-butylstyrene and halogenated styrene, acrylic acid and derivatives thereof, methacrylic acid and derivatives thereof, and carboxyl group-containing vinyl compounds, and one type or two or more types thereof can be used. Styrene and α-methylstyrene are particularly preferable, and styrene is more preferable.

The acrylonitrile copolymer of the present invention may be mixed with a rubbery polymer, and examples thereof include diene rubber, acryl rubber, and ethylene rubber. Specific examples thereof include polybutadiene, poly(butadiene-styrene), polyisoprene, poly(butadiene-butyl acrylate), poly(butadiene-methyl acrylate), poly(butadiene-methyl methacrylate), poly(butadiene-methyl methacrylate), poly(butadiene-ethyl acrylate), ethylene-propylene rubber, ethylene-propylene-diene rubber, poly(ethylene-isobutylene), and poly(ethylene-methyl acrylate). Among these rubbery polymers, polybutadiene, poly(butadienestyrene), and ethylene-propylene rubber are particularly preferably used.

The method for copolymerizing the acrylonitrile composition of the present invention and the vinyl compound is not particularly limited, and the acrylonitrile composition can be produced by a polymerization method such as an emulsion polymerization method, a suspension polymerization method, a bulk polymerization method, a solution polymerization method, or a combination thereof.

The acrylonitrile copolymer of the present invention may be a highly nitrile-containing vinyl copolymer, and as a polymerization method for obtaining the highly nitrile-containing vinyl copolymer, water suspension polymerization is preferable from the viewpoint of controlling the proportion of the vinyl cyanide-based monomer component in the residual monomer, reducing the oligomer, and inhibiting the color value stability upon heating at the time of melting with auxiliary materials such as an emulsifier and a solvent.

Mixing, blending, and melt extrusion of the acrylonitrile copolymer and the rubbery polymer of the present invention are not particularly limited, and conventionally known methods can be employed. For example, a ribbon blender, a V-type blender, a Henschel mixer, or the like can be used. Then, an acrylonitrile copolymer can be obtained by a kneading treatment using an extruder such as a single screw extruder or a biaxial extruder, a Banbury mixer, a mixing roll, a pressure kneader, or the like.

### [Production of Resin Molded Article of Acrylonitrile Copolymer]

The acrylonitrile copolymer of the present invention can be produced into a resin molded article by molding the acrylonitrile copolymer by a random method such as generally known injection molding, extrusion molding, inflation molding, or blow molding. Examples of the resin molded article include a film, a sheet, a fiber/cloth (textile, knitted, nonwoven), an injection molded article, an extrusion molded article, a vacuum pressure molded article, a blow molded article, and a composite with another material.

### EXAMPLES

Hereinafter, the present invention will be described more specifically with reference to examples, but the present invention is not limited to the following examples.

In the present example, the stability evaluation of the acrylonitrile composition and the content amount of the additive were performed by the following gas chromatography (GC) analysis.

### [GC Analysis Conditions]

GC apparatus: "GC2010 plus" (manufactured by Shimadzu Corporation)
Column: "DB-5", length 30 m, inner diameter 0.32 mm, film thickness 0.25 µm (manufactured by Agilent Technologies, Inc.)
Carrier gas: Helium, constant linear velocity (20.0 cm/sec)
Injection temperature: 250°C
Temperature of detector: 250°C
Column oven temperature: 50°C → (10°C/min) → 230°C (18 minutes in total)
Detector: FID.

### [Reference Example 1]

As the acrylonitrile used in Examples of the present application, Comparative Examples 2, 3 and 4, and Reference Example, acrylonitrile (containing 40 ppm of monomethyl ether hydroquinone (MEHQ) manufactured by Tokyo Chemical Industry Co., Ltd.) obtained by distillation purification (temperature: 60°C, pressure: 250 mmHg) was used. From GC analysis, it was confirmed that MEHQ was removed from acrylonitrile obtained by distillation. From ¹H NMR analysis and moisture measurement, it was confirmed that the acrylonitrile obtained by distillation has a weight purity of 99.9% or more.

### [Production of Acrylonitrile Composition (1)]

2-methyl-2-butenenitrile (manufactured by Tokyo Chemical Industry Co., Ltd.) was added to the acrylonitrile obtained in Reference Example 1 to obtain an acrylonitrile composition shown in Table 1 (Examples 1 and 2 and Comparative Examples 2 and 3).

### [Stability Test of Acrylonitrile (1)]

10 g of the acrylonitrile obtained in Reference Example 1 was added to a 30 mL glass vial with a screw cap, shielded from light by aluminum foil, and stirred at room temperature for 5 hours. About 0.04 g of the vial content after stirring was weighed into a 5 mL volumetric flask, and a 1,4-dioxane solution diluted to 5 mL with 1,4-dioxane (manufactured by Sigma-Aldrich Co. LLC.) was analyzed by GC. The value obtained by dividing the GC area of acrylonitrile in the GC analysis by the vial content concentration in the 1,4-dioxane solution was used as a reference (100) (in Table 1, Reference Example 1).

Next, commercially available acrylonitrile (manufactured by Tokyo Chemical Industry Co., Ltd., containing 40 ppm of MEHQ, Comparative Example 1), the acrylonitrile obtained in Reference Example 1, 10 g of the acrylonitrile compositions obtained in Examples 1 and 2 and Comparative Examples 2 and 3, and 0.1 g of iron powder (150 µm or less) (manufactured by FUJIFILM Wako Pure Chemical Corporation) were added in a 30 mL glass vial with a screw cap, shielded from light by aluminum foil, and stirred at room temperature for 5 hours. About 0.04 g of the vial content after stirring was weighed into a 5 mL volumetric flask, and a 1,4-dioxane solution diluted to 5 mL with 1,4-dioxane was analyzed by GC. The value obtained by dividing the GC area of acrylonitrile in this GC analysis by the concentration of the vial content in the 1,4-dioxane solution was compared with the standard of Reference Example 1, and the acrylonitrile residual ratio was calculated. The results are shown in Table 1.

### [Reference Example 2]

A stability test was similarly performed except that iron powder was not added to the acrylonitrile composition obtained in Comparative Example 3. The results are shown in Table 1.

**[Table 1]**

| | Acrylonitrile composition | | Stability test | | |
|---|---|---|---|---|---|
| | Additive | Additive Concentration (ppm) | Iron powder (g) | Stirring time (h) | Acrylonitrile residual ratio (%) |
| Reference Example 1 | Absent | - | Absent | 5 | 100 (reference) |
| Comparative Example 1 | MEHQ | 40 | 0.1 | 5 | 99.2 |
| Example 1 | 2-methyl-2-butenenitrile | 10 | 0.1 | 5 | 100.2 |
| Example 2 | 2-methyl-2-butenenitrile | 61 | 0.1 | 5 | 99.5 |
| Comparative Example 2 | 2-methyl-2-butenenitrile | 122 | 0.1 | 5 | 98.1 |
| Comparative Example 3 | 2-methyl-2-butenenitrile | 830 | 0.1 | 5 | 97.3 |
| Reference Example 2 | 2-methyl-2-butenenitrile | 830 | Absent | 5 | 100.2 |

| | | | | | |
|---|---|---|---|---|---|
| MEHQ: Monomethyl ether hydroquinone | | | | | |

From Comparative Example 1, it was shown that the acrylonitrile composition containing MEHQ, which is a generally used stabilizer, has poor stability in the presence of iron. From Comparative Examples 2 and 3 and Examples 1 and 2, it was found that when 2-methyl-2-butenenitrile was contained in an amount of 1 ppm or more and less than 100 ppm with respect to acrylonitrile, the residual ratio of acrylonitrile in the presence of iron was increased, that is, the stability of acrylonitrile was improved. From Reference Example 2, it was found that 2-methyl-2-butenenitrile itself did not change the stability of acrylonitrile.

### [Production of Acrylonitrile Composition (2)]

2-butenenitrile (manufactured by Sigma-Aldrich Co. LLC.) or acetonitrile (Tokyo Chemical Industry Co., Ltd.) was added to the acrylonitrile obtained in Reference Example 1 to obtain an acrylonitrile composition shown in Table 2 (Examples 3, 4, and 5 and Comparative Example 4).

### [Stability Test of Acrylonitrile (2)]

10 g of the acrylonitrile obtained in Reference Example 1 was added to a 30 mL glass vial with a screw cap, shielded from light by aluminum foil, and stirred at room temperature for 5 hours or for 18 hours. About 0.04 g of the vial content after stirring was weighed into a 5 mL volumetric flask, and a γ-butyrolactone solution diluted to 5 mL with γ-butyrolactone (manufactured by FUJIFILM Wako Pure Chemical Corporation) was analyzed by GC. The value obtained by dividing the GC area of acrylonitrile in the GC analysis by the vial content concentration in the γ-butyrolactone solution was used as a reference (100) (in Table,2 Reference Examples 3 and 4).

Next, commercially available acrylonitrile (manufactured by Tokyo Chemical Industry Co., Ltd., containing 40 ppm of MEHQ, Comparative Example 5), 10 g of the acrylonitrile compositions obtained in Examples 3, 4, and 5 and Comparative Example 4, and 0.1 g of iron powder (150 µm or less) (manufactured by FUJIFILM Wako Pure Chemical Corporation) were added in a 30 mL glass vial with a screw cap, shielded from light by aluminum foil, and stirred at room temperature for 5 hours or for 18 hours. About 0.04 g of the vial content after stirring was weighed into a 5 mL volumetric flask, and a γ-butyrolactone solution diluted to 5 mL with γ-butyrolactone was analyzed by GC. The value obtained by dividing the GC area of acrylonitrile in this GC analysis by the vial content concentration in the γ-butyrolactone solution was compared with the reference of Reference Example 3 or 4, and the acrylonitrile residual ratio was calculated. The results are shown in Table 2.

**[Table 2]**

| | Acrylonitrile composition | | Stability test | | |
|---|---|---|---|---|---|
| | Additive | Additive Concentration (ppm) | Iron powder (g) | Stirring time (h) | Acrylonitrile residual ratio (%) |
| Reference Example 3 | Absent | - | Absent | 5 | 100 (reference) |
| Example 3 | 2-butenenitrile | 63 | 0.1 | 5 | 100.1 |
| Example 4 | 2-butenenitrile | 94 | 0.1 | 5 | 100.0 |
| Comparative Example 4 | Acetonitrile | 35 | 0.1 | 5 | 99.1 |
| Reference Example 4 | Absent | - | Absent | 18 | 100 (reference) |
| Comparative Example 5 | MEHQ | 40 | 0.1 | 18 | 98.1 |
| Example 5 | 2-butenenitrile | 60 | 0.1 | 18 | 99.5 |

| | | | | | |
|---|---|---|---|---|---|
| MEHQ: Monomethyl ether hydroquinone | | | | | |

From Examples 3 and 4, it was found that when 2-butenenitrile was contained in an amount of 1 ppm or more and less than 100 ppm with respect to acrylonitrile, the residual ratio of acrylonitrile in the presence of iron was increased, that is, the stability of acrylonitrile was improved. From Comparative Example 4, it was found that acetonitrile did not change the stability of acrylonitrile in the presence of iron. From Reference Example 4, Comparative Example 5, and Example 5, it was shown that the acrylonitrile composition described in the present application has certainly high stability in the presence of iron.

### INDUSTRIAL APPLICABILITY

It is possible to provide an acrylonitrile composition having improved stability when stored in a container of iron or an alloy containing iron.

## Claims

1. An acrylonitrile composition containing 1 ppm or more and less than 100 ppm of at least one selected from a nitrile compound represented by general Formula (I) and a nitrile compound represented by general Formula (II) with respect to acrylonitrile: 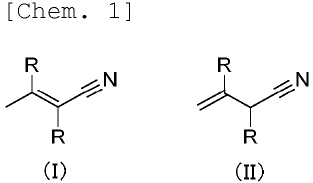 [in the formula, R each independently represents any of hydrogen and an alkyl group having 1-5 carbon atoms].

2. The acrylonitrile composition of claim 1, wherein the nitrile compound is a nitrile compound containing any of 2-methyl-2-butenenitrile, 2-butenenitrile, 2-methyl-3-butenenitrile, 3-methyl-3-butenenitrile, and 3-butenenitrile.

3. Polyacrylonitrile produced by polymerizing the acrylonitrile composition according to claim 1 or 2.

4. A method for producing polyacrylonitrile, the method comprising polymerizing the acrylonitrile composition according to claim 1 or 2.

5. An acrylonitrile copolymer produced by copolymerizing the acrylonitrile composition according to claim 1 or 2 and a vinyl compound.

6. A method for producing an acrylonitrile copolymer, the method comprising copolymerizing the acrylonitrile composition according to claim 1 or 2 and a vinyl compound.

7. A polyacrylonitrile fiber produced by a process including the following steps (A) and (B):
(A) a step of producing polyacrylonitrile by the method according to claim 4; and
(B) a step of spinning the polyacrylonitrile obtained in step (A).

8. A resin molded article produced by a process including the following steps (C) and (D):
(C) a step of producing acrylonitrile copolymer by the method according to claim 6; and
(D) a step of molding acrylonitrile copolymer obtained in step (C).
